# EUROPEAN PATENT APPLICATION

(11) **EP 2 902 904 A1**
(43) Date of publication of application: **05.08.2015**
(21) Application number: 15152002.0
(22) Date of filing: 21.01.2015
(51) Int. Cl.: G06F 9/54

(54) **Information processing terminal and control method**

(30) Priority: 22.01.2014 JP 2014009385
(71) Applicant: CANON KABUSHIKI KAISHA, Ohta-ku Tokyo 146-8501 (JP)
(72) Inventor: IGARASHI, Toshiaki, Ohta-ku, Tokyo (JP)
(74) Representative: Uffindell, Christine Helen

(57) **Abstract**

To invoke, via a user agent, a function that an application residing in an information processing terminal provides, a proxy application converts definition information of the application into Web Intents format and registers the converted information with the user agent. In response to a Web Intents request, the user agent provides, to a user, a screen used to invoke a service residing on a network and the function that the application residing in the information processing terminal provides. In response to a selection instruction issued by the user to the screen, the user agent invokes the function of the application via the proxy application.

## Description

### BACKGROUND OF THE INVENTION

### Field of the Invention

The present invention relates to a technique used to allow a service residing on a network and an application residing in an information processing terminal to cooperate with each other.

### Description of the Related Art

Recently, with the popularization of information processing terminals such as smartphones, schemes to realize cooperation between a plurality of applications and to provide more advanced services to users have come into practice.

For example, Japanese Patent Application Laid-Open No. 2013-96969 discusses a technique in which, as a first application passes an image identifier to a second application, the second application becomes able to display a higher resolution image than that displayed by the first application.

In addition, on the Internet, schemes to realize cooperation between web applications residing in a website having a web server function have been proposed. Examples of those schemes include Web Intents.

However, the above-mentioned technique discussed in Japanese Patent Application Laid-Open No. 2013-96969, which enables two applications residing in an information processing terminal to cooperate with each other, does not take cooperation with a web application on the Internet into consideration.

Furthermore, new schemes for cooperation, such as Web Intents, which enable web applications to cooperate with each other, cannot realize cooperation with a general application residing in an information processing terminal.

### SUMMARY OF THE INVENTION

The present invention is directed to schemes enabling an application that is executed within an information processing terminal and a web application to readily cooperate with each other.

According to a first aspect of the present invention, there is provided an information processing terminal as specified in claims 1 to 10. According to a second aspect of the present invention, there is provided a control method as specified in claim 11. According to a third aspect of the present invention, there is provided a program as specified in claim 12. According to a fourth aspect of the present invention, there is provided a computer-readable storage medium as specified in claim 13.

Further features of the present invention will become apparent from the following description of embodiments with reference to the attached drawings.

### BRIEF DESCRIPTION OF THE DRAWINGS

Fig. 1 illustrates an example of a basic system configuration of Web Intents.
Fig. 2 is a sequence diagram illustrating an example outline of basic operations of Web Intents.
Figs. 3A and 3B illustrate an example of registration markup in Web Intents and an example of a basic Web Intent processing request in Web Intents.
Fig. 4 illustrates an example of an overall configuration of Local Intents.
Fig. 5 is a sequence diagram illustrating an example outline of basic operations of Local Intents.
Figs. 6A and 6B illustrate an example of registration markup in Local Intents and an example of a basic Local Intent processing request in Local Intents.
Fig. 7 illustrates a system configuration according to an embodiment of the present invention.
Fig. 8 illustrates an example hardware configuration of an information processing terminal.
Figs. 9A and 9B illustrate example software configurations of a server and the information processing terminal, respectively.
Figs. 10A, 10B, 10C, and 10D illustrate example configurations of tables according to a first embodiment.
Fig. 11 is a sequence diagram illustrating an example operation performed at the time of installing a proxy application according to the first embodiment.
Fig. 12 is a sequence diagram illustrating an example operation performed when a client and a cooperation-destination application perform cooperation according to the first embodiment.
Figs. 13A and 13B illustrate example user interfaces (UIs) of the information processing terminal according to the first embodiment.
Figs. 14A and 14B illustrate examples of a manifest file and source code, respectively, of a proxy application according to a second embodiment.
Figs. 15A, 15B, and 15C illustrate example configurations of tables according to a third embodiment.
Fig. 16 is a sequence diagram illustrating an example operation performed at the time of installing a proxy application according to the third embodiment.
Fig. 17 is a sequence diagram illustrating an example operation performed when a client and a cooperation-destination application perform cooperation according to the third embodiment.
Figs. 18A and 18B illustrate example UIs of an information processing terminal according to the third embodiment.
Fig. 19 illustrates an example of a manifest file of a proxy application according to a fourth embodiment.
Fig. 20 illustrates an example user interface (UI) of an information processing terminal according to the fourth embodiment.

### DESCRIPTION OF THE EMBODIMENTS

Various embodiments, features, and aspects of the invention will be described in detail below with reference to the drawings.

### <Fundamental Structure of Web Intents>

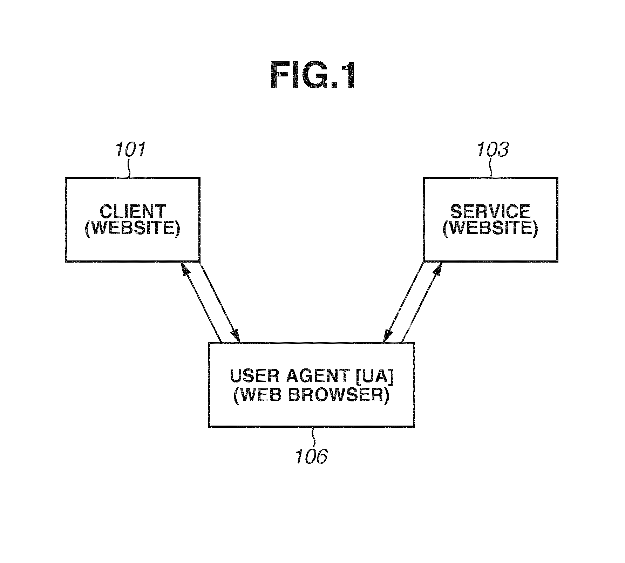

First, a fundamental structure about Web Intents, which is an example framework for cooperating with an arbitrary web service (or a web application) without using a dedicated Application Programming Interface (API), is described with reference to Fig. 1 to Fig. 3A. While, in an embodiment of the present invention, Web Intents is taken as a specific example, another similar framework may be applied as a technique to cooperate with an arbitrary web service (or a web application).

Fig. 1 illustrates an overall configuration of Web Intents.

Referring to Fig. 1, a Web Intents service (hereinafter simply referred to as a "service") 103 provides a service or function using the Web Intents technique. A Web Intents client (hereinafter simply referred to as a "client") 101 uses the service 103. A user agent (UA) 106 functions to pass a request from the client 101 to the service 103 and to pass a result from the service 103 to the client 101. The UA 106 can be said to be a relay function for performing a request and exchanging data between the client 101 and the service 103. Moreover, the UA 106 allows Web Intent, which is information for invoking a provision function of the service 103 (a function that the service 103 provides), to be registered with the UA 106.

In the present structure, for example, the client 101 is a website on which buttons for managing data and invoking services are disposed. The UA 106 is a web browser for displaying the website. The service 103 is a website, which is a cooperation destination of the client 101, for receiving, via the UA 106, and processing data managed by the client 101.

For example, in a case where the present structure is applied to a social networking service (SNS), the service 103 is a posting-destination service that receives photographs or comments managed by a client and constitutes a browsing site. If social buttons, such as "Like", "Check", and "Share", of the SNS service are likened to the structure of Web Intents, the client 101 is a site on which the buttons are disposed, the UA 106 is a web browser, and the service 103 is a posting-destination service to which posts, such as "Like", are delivered. When the service 103 provides a service, if user authentication or user operation is required, the user performs such an operation on the UA 106.

The UA 106 may be implemented with an operating system (OA) or an application running on an information processing terminal, besides a web browser, as long as it has a function for cooperating with a service, which is described below. Examples of the information processing terminal include a personal computer, a smartphone, a tablet-type computer, and an automotive navigation system.

The service 103 can also be a service provider, examples of which include, besides a service provider on the Internet such as the above-mentioned posting-destination service, devices, such as a camera, a printer, and a scanner, built in the information processing terminal. Furthermore, examples of the service 103 include peripheral devices, such as a printer, a scanner, and a network camera, and home electric appliances, such as a refrigerator and a television set, which are connected via the network. Any combination of the client 101, the UA 106, and the service 103 can operate within the same system. Specifically, a document editing application having a function equivalent to that of a web browser can operate as a configuration including the client 101 and the UA 106. Furthermore, all of the client 101, the UA 106, and the service 103 may operate on the same apparatus.

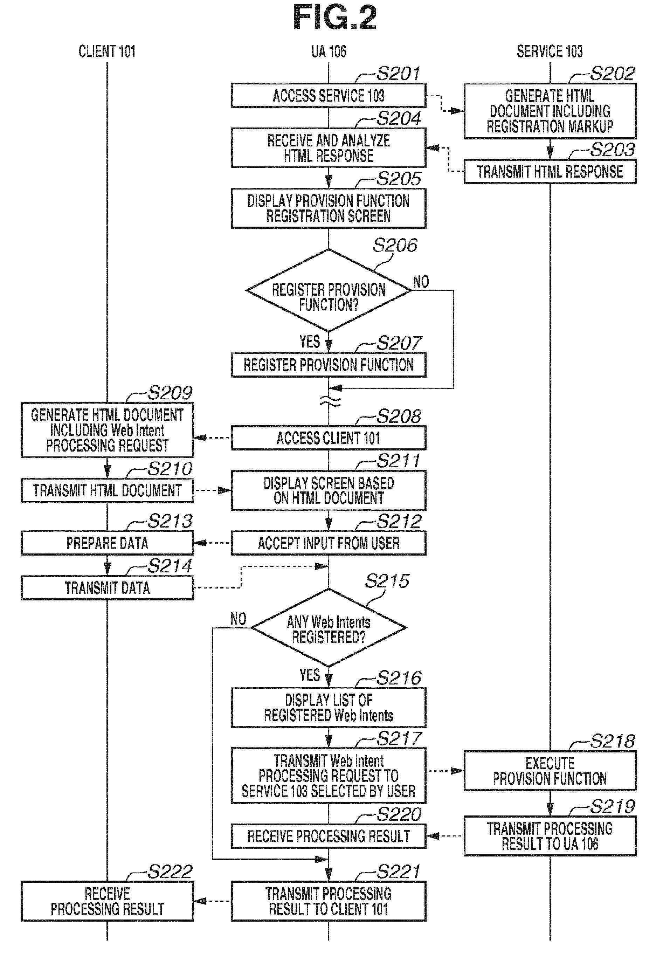

Fig. 2 is a sequence diagram illustrating a basic operation about the provision of a service using Web Intents. This sequence diagram is composed of a service registration section, including steps S201 to S207, and a service execution section, including steps S208 to S222.

First, the service registration section is described.

In step S201, the UA 106 accesses the service 103 in response to the user operation. In step S202, the service 103 generates a HyperText Markup Language (HTML) response including a registration markup used to cause a function that the service 103 provides to be registered by the UA 106. In step S203, the service 103 transmits the HTML response to the UA 106.

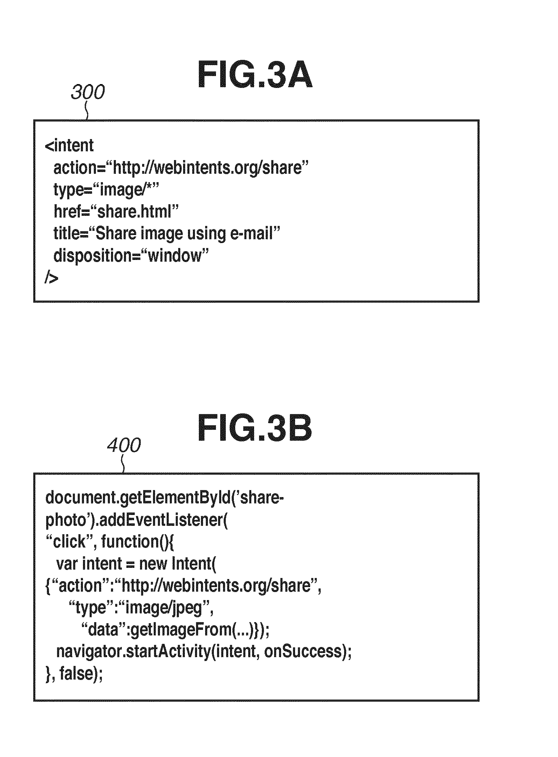

Fig. 3A illustrates an example of the HTML document 300 transmitted from the service 103 to the UA 106 in step S203. The contents of the HTML document 300, which is transmitted from the service 103 to the UA 106, are described below with reference to the example illustrated in Fig. 3A.

In the <intent> tag, function information for specifying a provision function and invoking a function that the service 103 provides is described. The action attribute represents classification information (category) of the provision function. In other words, the action attribute represents classification information indicating what function or service the provision function provides. Examples of the classification information of the provision function include classification information "Share" corresponding to a function that shares data, classification information "Edit" corresponding to a function that edits data, classification information "View" corresponding to a function that views data, classification information "Pick" corresponding to a function that picks up data, and classification information "Save" corresponding to a function that saves data. In other words, in the above-mentioned function information, classification information of any one of, for example, Share, Edit, View, Pick, and Save is described.

The type attribute represents the type of data that the provision function is able to handle. In other words, the type attribute represents the data type that can be handled with respect to the action attribute. The href attribute represents a connection destination (Uniform Resource Locator (URL)) of the provision function. The title attribute represents the title of the provision function. The disposition attribute represents how the invoked provision function is displayed.

In the example illustrated in Fig. 3A, the category of the provision function is "Share", the type of data that can be handled is "image data of every format (*)" and the connection destination is "share.html". Furthermore, the title is "Share image using e-mail". Moreover, this example indicates that the provision function is displayed on a separate window via the UA 106.

In step S204, the UA 106 receives and analyzes the HTML response. In step S205, the UA 106 displays a provision function registration screen, for example, a pop-up window if the UA 106 is a web browser, to prompt the user to determine whether to register the provision function of the service 103 with the UA 106. In step S206, the UA 106 determines whether the user has decided to register the provision function of the service 103 with the UA 106. If the user has decided to register the provision function as Web Intents (YES in step S206), then in step S207, the UA 106 performs registration processing for storing information received in step S204 in the UA 106. More specifically, the UA 106 stores the information received in step S204 into a storage area of the information processing terminal on which the UA 106 operates, thus registering the information as Web Intents in the UA 106. On the other hand, if the user has decided not to register the provision function as Web Intents (NO in step S206), the UA 106 does not perform the registration processing in Web Intents.

Next, the service execution section is described.

In step S208, the UA 106 accesses the client 101 in response to the user operation. In step S209, the client 101 generates an HTML document on which information indicating that the client 101 intends to use the provision function of the service 103 (Web Intent) is described. In step S210, the client 101 transmits the HTML document to the UA 106. For example, in a case where a "Share" button as well as an image is displayed on a website serving as the client 101, the website transmits, to the UA 106, an HTML document including ECMAScript such as that illustrated in Fig. 3B, which is a Web Intent processing request.

Fig. 3B illustrates an example of the HTML document 400, which is transmitted from the client 101 to the UA 106 in step S210. The contents of the HTML document 400, which is transmitted from the client 101 to the UA 106, are described below with reference to the example illustrated in Fig. 3B.

ECMAScript indicates that, upon clicking of a button having an ID "share-photo" in HTML, the designated unnamed function is executed. The unnamed function first generates a new Intent object, and invokes a startActivity() function with the new Intent object used as an argument. When this function is executed, the UA 106 extracts, from among Web Intents registered by using the UA 106 itself, Web Intents the action and type of which coincide with those of the designated Web Intent object, and displays a list of the extracted Web Intents, thus prompting the user to make a selection. Furthermore, the UA 106 executes a getImageFrom() function, which is invoked within the unnamed function, to acquire image data stored in the client 101.

In step S211, the UA 106 receives the HTML document transmitted from the client 101, and displays a screen based on the received HTML document. In step S212, when detecting the press of a "Share" button on the screen by the user, the UA 106 executes ECMAScript for activating Web Intents, as described above, and issues an image data acquisition request to the client 101. In step S213, upon receipt of the image data acquisition request issued in step S212, the client 101 prepares image data. In step S214, the client 101 transmits the prepared image data to the UA 106. Then, the UA 106 receives the image data transmitted from the client 101.

With the press of the "Share" button in step S212, then in step S215, the UA 106 determines whether any Web Intents is registered with the UA 106 itself. If any Web Intents is registered with the UA 106 (YES in step S215), then in step S216, the UA 106 displays a list of Web Intents registered with the UA 106. If no Web Intents indicating a provision function is registered with the UA 106 (NO in step S215), the processing proceeds to step S221. In step S221, the UA 106 transmits, to the client 101, a message indicating that the processing has failed.

When detecting that the user has selected Web Intent indicating a provision function of the service 103 from the list of Web Intents, in step S217, the UA 106 transmits a HyperText Transfer Protocol (HTTP) request (Web Intent processing request) to the service 103, which provides the selected provision function. In doing so, the UA 106 includes, in the transmitted data, the contents of a Web Intent object created by ECMAScript illustrated in Fig. 3B.

In step S218, the service 103 extracts the Web Intent object from the HTTP request (Web Intent processing request) received from the UA 106, and, while interacting with the user via the UA 106, implements the use of the selected provision function (in this case, "Share" of image data belonging to the client 101).

Upon completion of processing about the provision function, in step S219, the service 103 transmits, to the UA 106, a response including ECMAScript for transmitting a processing result to the client 101. In step S220, the UA 106 executes ECMAScript included in the response, and invokes a callback function onSuccess() designated by the argument of the startActivity() function obtained in step S211. In step S221, the UA 106 transmits the processing result to the client 101 according to the callback function onSuccess(). Finally, in step S222, the client 101 receives the processing result.

Here, an example in which webmail is used in the sequence illustrated in Fig. 2 is described. First, the user uses a web browser (the UA 106) to visit a site on which a button for invoking Web Intents of a web storage (the client 101), which manages photograph data, is provided, and presses the button. Then, the web browser (the UA 106) displays a pop-up window including a list of registered services. When the user selects a webmail function as a service, a site for providing the webmail function is displayed on a separate window, and a new email with photograph data attached is created on the window as a processing result. In the following description, an operation for extracting a Web Intent object from the Web Intent processing request and analyzing and processing the Web Intent object, as described above, is referred to as "processing Web Intent".

The above-described processing enables the client 101 to invoke, via the UA 106, a function of Web Intents that the service 103 provides (in this example, "Share" of image data).

### <Basic Scheme about Cooperation between Applications within Mobile Terminal>

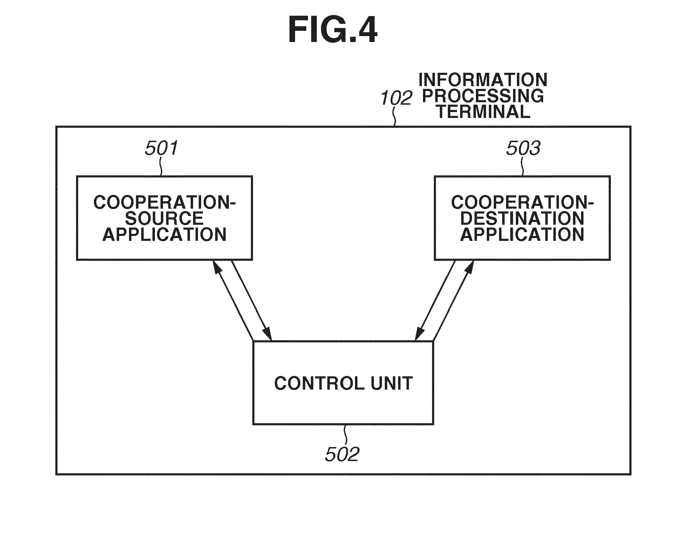

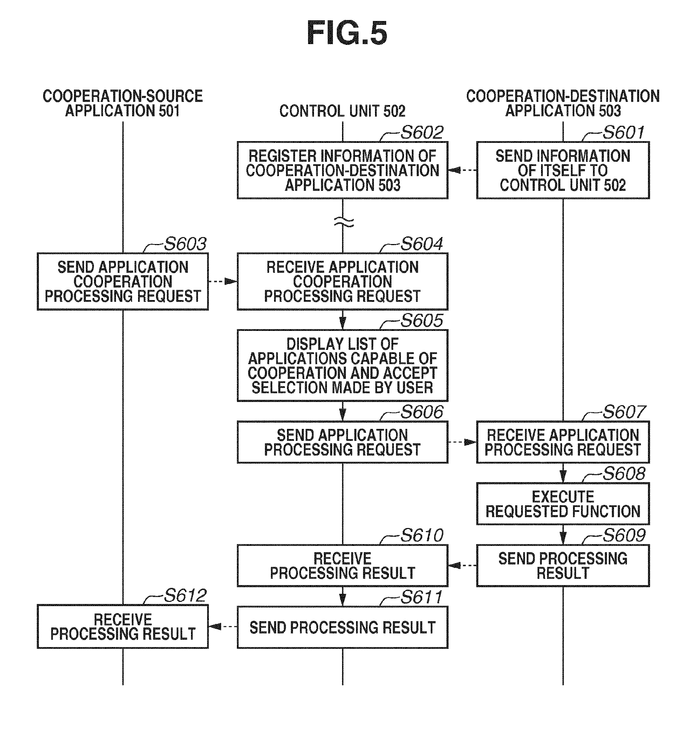

Next, a basic scheme about cooperation between applications running within a mobile terminal, which is an example of the information processing terminal, is described with reference to Figs. 4 and 5. In the present embodiment, an example in a case where Android (registered trademark) or the like runs as an operating system within the mobile terminal is described.

In the Android (registered trademark) operating system (OS), Intents is used to perform cooperation, such as passing and receiving data between a plurality of applications. Here, Intents in Android refers to registration information used for invocation of a service in cooperation between applications or a scheme using the registration information. In the following description in the present specification, Intents that is an example of registration information used for invocation of the functions of different applications running within a terminal executed by the OS of Android or the like is referred to as "Local Intents" to distinguish it from Web Intents. Furthermore, the present invention can also apply to a case where an OS other than Android runs as long as it has a similar scheme for implementing exchange of data or cooperation of services between applications running within a terminal as described above.

Fig. 4 illustrates an overall configuration of Local Intents.

Referring to Fig. 4, in an information processing terminal 102, a cooperation-destination application 503 provides a function using the Local Intents technique. A cooperation-source application 501 uses the function of the cooperation-destination application 503. A control unit 502 passes a request from the cooperation-source application 501 to the cooperation-destination application 503, and passes a result from the cooperation-destination application 503 to the cooperation-source application 501. The control unit 502 can be implemented with, for example, an OS.

Fig. 5 is a sequence diagram illustrating a basic operation about the provision of a function using Local Intents. This sequence diagram is composed of an application registration section, including steps S601 and S602, and an application execution section, including steps S603 to S612.

First, the application registration section is described.

After being installed on the information processing terminal 102 by the user operation or the like, in step S601, the cooperation-destination application 503 sends, to the control unit 502, information about the function the cooperation-destination application 503 provides. Upon receipt of the information from the cooperation-destination application 503, in step S602, the control unit 502 registers, with the control unit 502, the information about the function that the cooperation-destination application 503 provides.

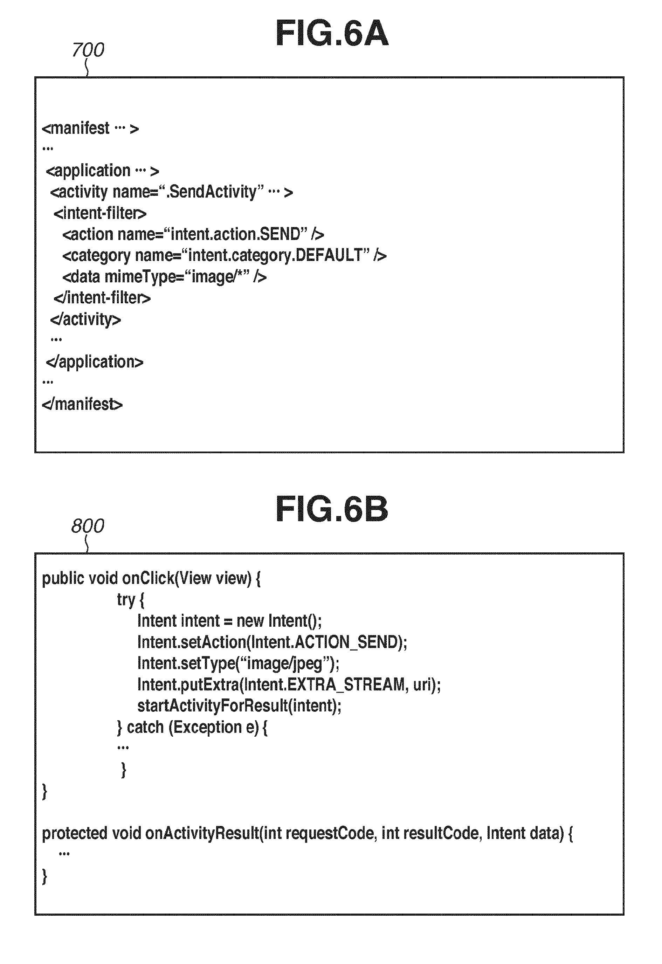

Fig. 6A illustrates an example of a part of a manifest file 700 for registering, with the control unit 502, the function that the cooperation-destination application 503 provides after the cooperation-destination application 503 is installed.

In the manifest file 700, an <application> tag is written. In the <application> tag, definition information of the function that the cooperation-destination application 503 provides is described. In an <activity> tag, information about a function that the cooperation-destination application 503 provides is described. In a case where the cooperation-destination application 503 provides a plurality of functions, a number of <activity> tags corresponding to the number of provided functions are written in the manifest file 700.

In an <intent-filter> tag, information for informing the control unit 502 what Local Intent request the function can accept and what data the function is able to handle is described. More specifically, <action>, <category>, and <data> tags are written in the <intent-filter> tag.

The <action> tag indicates what Local Intents request the function can accept. The <category> tag indicates additional information representing the type of the function. The <data> tag indicates the type of data that the function is able to handle. In other words, the <data> tag indicates the type of data that is able to be handled with respect to the content of the <action> tag. The example illustrated in Fig. 6A indicates that the function the name of the "activity" of which is "SendActivity" accepts a Local Intent request for sending data (intent.action.SEND). Furthermore, the description of the <data> tag indicates that the type of data that is able to be handled is image data of every format (*).

Next, the application execution section is described.

In step S603, upon receipt of a user operation, such as the press of a button, the cooperation-source application 501 sends a Local Intent processing request as an application cooperation processing request to the control unit 502 so as to cooperate with another application. In step S604, the control unit 502 receives the request sent in step S603. In step S605, the control unit 502 displays a list of applications capable of cooperating with the cooperation-source application 501. Here, an example of source code used for the cooperation-source application 501 to accept the press of a button in step S603 and operations in steps S603 and S604 are described in detail with reference to Fig. 6B.

Fig. 6B illustrates an example of a part of source code 800 used for the cooperation-source application 501 to accept the press of a button in step S603.

The source code 800 is composed of two functions onClick() and onActivityResult(). The onClick()function is a function which the cooperation-source application 501 executes when accepting the press of the button. The onActivityResult()function is a function which the cooperation-source application 501 executes when receiving, from the control unit 502, a result obtained in response to the Local Intent processing request.

The cooperation-source application 501 executes the onClick()function when a button displayed on a user interface (UI) is pressed. In the onClick() function, the cooperation-source application 501 generates a new Local Intent object and invokes a startActivityForResult() function of the control unit 502 with the new Local Intent object used as an argument (step S603). After the startActivityForResult() function is executed, the control unit 502 receives the Local Intent processing result as an application cooperation processing request (step S604). Next, the control unit 502 extracts applications that provide provision functions the Action and Type of which coincide with those of the designated Local Intent from among provision functions registered with the control unit 502, and displays a list of the extracted applications. Then, the control unit 502 accepts selection of a cooperation-destination application made by the user (step S605). In the example illustrated in Fig. 6B, the Action indicates ACTION_SEND, and a list of applications capable of processing image data of every format (*) is displayed. Thus, the cooperation-destination application 503 is also displayed in the list.

The description now refers back to Fig. 5.

When the cooperation-destination application 503 is selected by the user from the list, in step S606, the control unit 502 sends an application processing request to the selected cooperation-destination application 503. More specifically, the control unit 502 passes a Local Intent processing request to the selected cooperation-destination application 503. In doing so, the control unit 502 includes the content of a Local Intent object in the Local Intent processing request.

In step S607, the cooperation-destination application 503 receives the Local Intent processing request. In step S608, the cooperation-destination application 503 extracts the Local Intent object from the Local Intent processing request received in step S607, and implements a function to be provided (a function requested by the cooperation-source application 501). For example, the cooperation-destination application 503 extracts image data from the Local Intent object, and stores the image data into a region that the cooperation-destination application 503 itself manages. In the following description, an operation for extracting the Local Intent object from the Local Intent processing request and analyzing and processing the extracted Local Intent object, as described above, is referred to as "processing Local Intent".

Upon completion of the Local Intent processing, in step S609, the cooperation-destination application 503 sends a processing result to the control unit 502. In step S610, the control unit 502 receives the processing result. In step S611, the control unit 502 invokes the callback function onActivityResult() to send the processing result to the cooperation-source application 501. In step S612, the cooperation-source application 501 receives the processing result.

The above-described processing enables the cooperation-source application 501 to invoke, via the control unit 502, a function that the cooperation-destination application 503 provides.

### <System Configuration in an Embodiment of the Present invention>

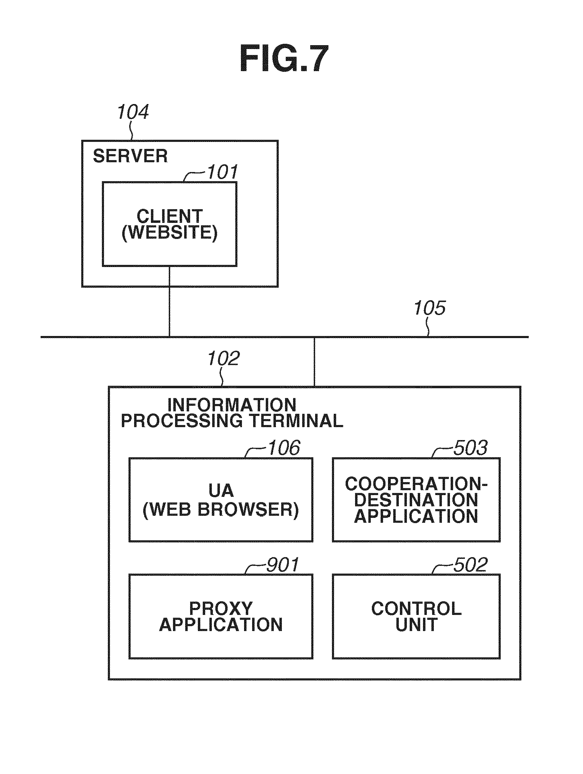

Fig. 7 illustrates a configuration example of a network system to which the scheme of Web Intents is applied according to an embodiment of the present invention.

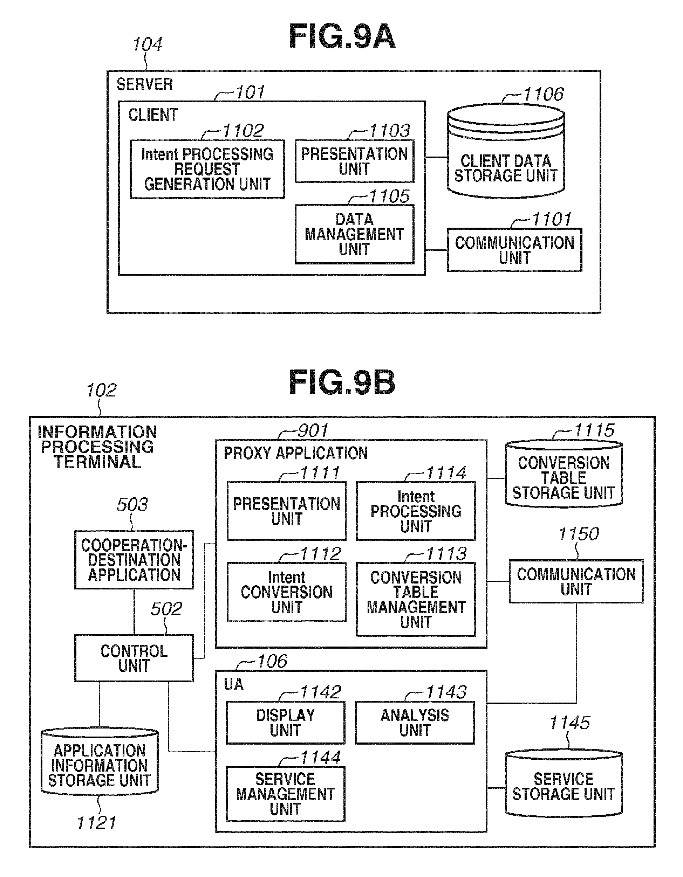

Referring to Fig. 7, a web browser 106, which functions as a user agent (UA) of Web Intents, a control unit 502, and a cooperation-destination application 503 run on an information processing terminal 102. Furthermore, a proxy application 901, which is illustrated in Fig. 9B described below, also runs on the information processing terminal 102. A client 101 of Web Intents runs on a sever 104.

The information processing terminal 102 and the server 104 can communicate with each other via a network 105. The network 105 can be a local area network (LAN), the Internet, or a combination thereof. The connection configuration of the network 105 may be wired or wireless.

### <Hardware Configuration Example of the Information Processing Terminal 102 according to the Present Embodiment>

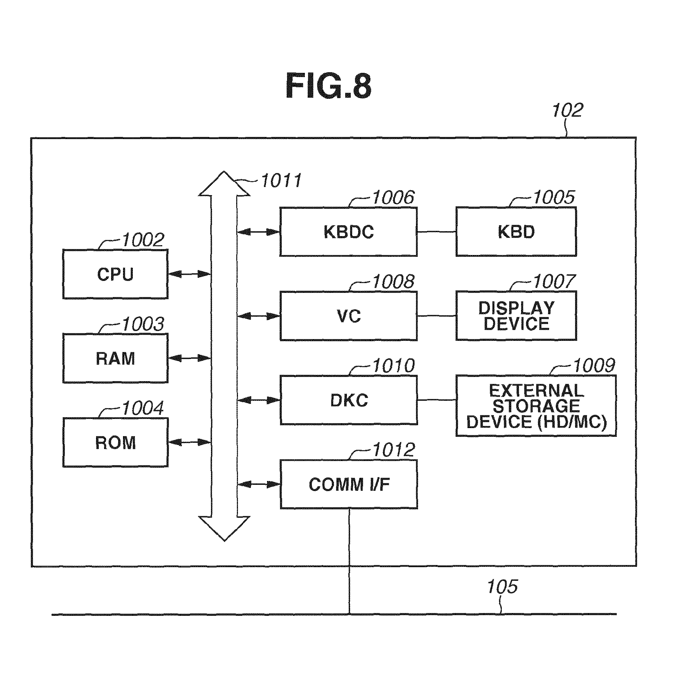

Fig. 8 is a block diagram illustrating a hardware configuration of the information processing terminal 102, in which programs serving as the UA 106, the cooperation-destination application 503, and the proxy application 901 are executed. Furthermore, the server 104, in which a program serving as the client 101 (a website or the like) runs, can also have a similar configuration.

Referring to Fig. 8, the information processing terminal 102 includes a central processing unit (CPU) 1002, a random access memory (RAM) 1003, a read-only memory (ROM) 1004, and an external storage device 1009. The CPU 1002 executes programs stored in the ROM 1004 and the external storage device 1009 or programs downloaded over the network 105, such as a LAN or the Internet, and comprehensively controls each device connected to a system bus 1011.

The RAM 1003 functions as a main memory or work area for the CPU 1002. The external storage device 1009 is composed of a hard disk (HD) or a memory card (MC). The external storage device 1009 stores various applications, including a boot program, an operating system, an authentication server, and an authentication client, database data, and user files.

A keyboard controller (KBDC) 1006 sends input information from a keyboard (KBD) 1005 or a pointing device (not illustrated) to the CPU 1002. In a case where the information processing terminal 102 is a mobile terminal, the keyboard 1005 can be generally implemented with software.

A video controller (VC) 1008 controls a display operation of a display device 1007, which is composed of a cathode-ray tube (CRT) or a liquid crystal device (LCD). A disk controller (DKC) 1010 controls access to the external storage device 1009. The information processing terminal 102 is connected to the network 105 via a communication controller (COMM I/F) 1012.

### <Software Configuration Example of the Server 104 according to the Present Embodiment>

Fig. 9A illustrates a configuration example of software (processing units) of the server 104.

In the server 104, the client 101 and each processing unit exist as files stored in an external storage device 1009 of the server 104. These files are program modules which, when executed, are loaded onto a RAM 1003 of the server 104 by another processing unit (a CPU 1002 of the server 104) using the OS or each processing unit thereof and are then executed.

The client 101 is an application that provides, for example, a storage service, such as storage of image data or document data. The client 101 is implemented as a program that executes processing in response to an HTTP request. The client 101 includes an Intent processing request generation unit 1102, a presentation unit 1103, and a data management unit 1105.

The Intent processing request generation unit 1102 is a software module that generates ECMAScript, which is an Intent processing request. The presentation unit 1103 is a software module that generates an HTML document in response to a page acquisition request received via a communication unit 1101. The data management unit 1105 is a software module that acquires or stores data, such as image data, from or into a client data storage unit 1106 in response to a request from the presentation unit 1103.

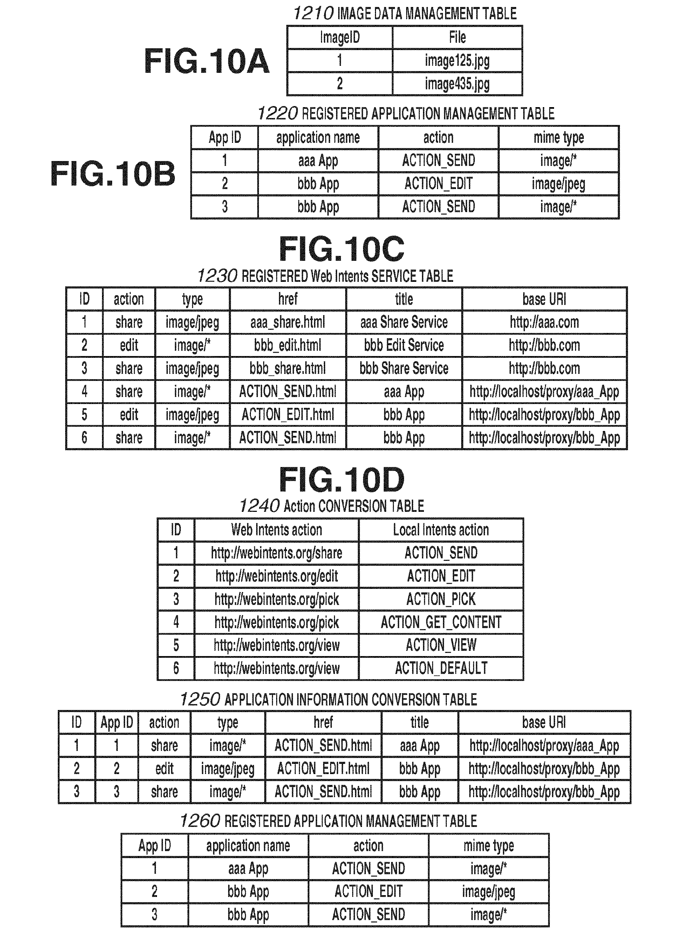

The client data storage unit 1106 stores and manages data and performs storage and retrieval of data in response to a request from another processing unit. The client data storage unit 1106 stores and manages an image data management table 1210, such as that illustrated in Fig. 10A, which is described below, and data, such as image data. Furthermore, the client data storage unit 1106 may be located on another apparatus.

The communication unit 1101 is a software module that receives an HTTP request message from an external apparatus and informs the presentation unit 1103 of the content of the HTTP request message. Furthermore, the communication unit 1101 transmits an HTTP response message to the external apparatus in response to a request from the presentation unit 1103.

### <Software Configuration Example of the Information Processing Terminal 102 according to the Present Embodiment>

Fig. 9B illustrates a configuration example of software (processing units) of the information processing terminal 102.

In the information processing terminal 102, a control unit 502, a UA 106, an cooperation-destination application 503, a proxy application 901, and each processing unit exist as files stored in an external storage device 1009 of the information processing terminal 102. These files are program modules which, when executed, are loaded onto a RAM 1003 of the information processing terminal 102 by another processing unit (a CPU 1002 of the information processing terminal 102) using the OS or each processing unit thereof and are then executed.

An application information storage unit 1121 is connected to the control unit 502. For example, after step S601 illustrated in Fig. 5 is performed, in step S602, the control unit 502 registers information described in a manifest file, such as that illustrated in Fig. 6A, with the application information storage unit 1121. The application information storage unit 1121 stores and manages a registered application management table 1220, such as that illustrated in Fig. 10B, which is described below.

The UA 106 includes a display unit 1142, an analysis unit 1143, and a service management unit 1144. The display unit 1142 is a software module that renders an HTML document. Furthermore, the display unit 1142 displays a screen used to accept selection of a service in response to a request from another processing unit.

The analysis unit 1143 is a software module that analyzes an HTML document. The analysis unit 1143 also analyzes ECMAScript, which is an Intent processing request. The service management unit 1144 is a software module that acquires or stores information specifying a registered provision function from or into a service storage unit 1145, which is described below. The service storage unit 1145 manages a list of provision functions of Web Intents including the service 103 illustrated in Fig. 1 and provision functions that the proxy application 901, which is described below, provides, and performs storage and retrieval of data in response to a request from the service management unit 1144. The service storage unit 1145 stores and manages a registered Web Intents service table 1230, such as that illustrated in Fig. 10C. Furthermore, the service storage unit 1145 may be located within the external storage device 1009 of the information processing terminal 102 or may be located on an apparatus different from the information processing terminal 102.

The proxy application 901 includes a presentation unit 1111, an Intent conversion unit 1112, a conversion table management unit 1113, and an Intent processing unit 1114. The presentation unit 1111 is a software module that generates an HTML document in response to a request for registering information about the cooperation-destination application 503 with the control unit 502. Furthermore, functions that the cooperation-destination application 503 provides are not compliant with a format for registration processing by the UA 106 (the format of Web Intents).

The Intent conversion unit 1112 is a software module that performs conversion of information of the Web Intents format and information of the Local Intents format. The conversion table management unit 1113 is a software module that acquires or stores conversion tables used for the Intent conversion unit 1112 to perform conversion of information from or into a conversion table storage unit 1115, which is described below. The Intent processing unit 1114 is a software module that performs processing about Local Intents, such as acquisition of Local Intents information.

The conversion table storage unit 1115 manages tables used to perform conversion of information of the Web Intents format and information of the Local Intents format, and performs storage and retrieval of data in response to a request from the conversion table management unit 1113. The conversion table storage unit 1115 stores and manages an Action conversion table 1240, an application information conversion table 1250, and a registered application management table 1260, such as those illustrated in Fig. 10D, which are described below. Furthermore, the conversion table storage unit 1115 may be located within the external storage device 1009 of the information processing terminal 102 or may be located on an apparatus different from the information processing terminal 102.

A communication unit 1150 transmits an HTTP request message to an external apparatus or the proxy application 901 in response to a request from another processing unit. Furthermore, the communication unit 1150 is a software module that receives an HTTP response message from the external apparatus or the proxy application 901 and informs the analysis unit 1143 of the content of the HTTP response message.

Figs. 10A, 10B, 10C, and 10D illustrate configuration examples of tables according to a first embodiment.

Fig. 10A illustrates a configuration example of the image data management table 1210 managed by the client 101 of the server 104. The table configuration illustrated in Fig. 10A is only an example and may be a different table configuration.

The image data management table 1210 is a table used to manage image data that the client 101 handles. Information managed with the image data management table 1210 includes "ImageID" and "File". "ImageID" is an identifier (ID) for uniquely identifying each specific data in the client 101. "File" represents the file name of each specific data. Thus, in the case of the image data management table 1210, two image data files "image125.jpg" and "image435.jpg" are managed.

Fig. 10B illustrates a configuration example of the registered application management table 1220 managed by the control unit 502 of the information processing terminal 102. The table configuration illustrated in Fig. 10B is only an example and may be a different table configuration.

The registered application management table 1220 is a table used to manage a list of provision functions of applications registered with the information processing terminal 102. Information managed by the registered application management table 1220 includes "App ID", "application name", "action", and "mime (Multipurpose Internet Mail Extensions (MIME)) type". "App ID" is an ID for uniquely identifying a provision function of each application in the control unit 502. "application name" represents the name of each application. "action" represents the category of a function that each application is able to provide. "mime type" represents the type of data or the like that each application is able to handle.

Fig. 10C illustrates a configuration example of the registered Web Intents service table 1230 managed by the UA 106 of the information processing terminal 102. The table configuration illustrated in Fig. 10C is only an example and may be a different table configuration.

The registered Web Intents service table 1230 is a table used to manage information about provision functions of Web Intents that the UA 106 is able to relay. Information managed by the registered Web Intents service table 1230 includes "ID", "action", "type", "href", "title", and "base URL". These elements correspond to information indicated by the <intent> tag illustrated in Fig. 3A.

"ID" is an ID for uniquely identifying each provision function of Web Intents in the UA 106. "action" represents the category of each provision function. "type" represents the type of data or the like that each provision function is able to handle. "href" represents the connection destination (URL) of each provision function. "title" represents the title of each provision function. "base URL" represents a URL serving as a benchmark for a site that provides each provision function.

Fig. 10D illustrates configuration examples of tables managed by the proxy application 901 of the information processing terminal 102. The table configurations illustrated in Fig. 10D are only examples and may be different table configurations.

The proxy application 901 manages the Action conversion table 1240, the application information conversion table 1250, and the registered application management table 1260.

The Action conversion table 1240 is a table used to manage conversion method for Web Intents action and Local Intents action. The application information conversion table 1250 is a table used to manage a result obtained by converting information of each application in the information processing terminal 102 into information of the Web Intents format. The registered application management table 1260 is similar to the registered application management table 1220 illustrated in Fig. 10B.

Information managed by the Action conversion table 1240 includes "ID", "Web Intents action", and "Local Intents action". "ID" is an ID for uniquely identifying a conversion method in the proxy application 901. "Web Intents action" represents action information of Web Intents. "Local Intents action" represents action information of Local Intents.

Information managed by the application information conversion table 1250 includes "ID", "App ID", "action", "type", "href", "title", and "base URL". "ID" is an ID for uniquely identifying the converted Web Intents information. "App ID" is an ID for uniquely identifying each application on which information conversion is performed with the application information conversion table 1250. In the case illustrated in Fig. 10D, an ID corresponding to "App ID" of the registered application management table 1260 is stored in "App ID" of the application information conversion table 1250. Information generated from "application name", "action", and "mime type" of the registered application management table 1260 is stored in "action", "type", "href", "title", and "base URL" of the application information conversion table 1250. The rule of generation of such information is described below.

Since the registered application management table 1260 is similar to the registered application management table 1220 illustrated in Fig. 10B, the description thereof is omitted.

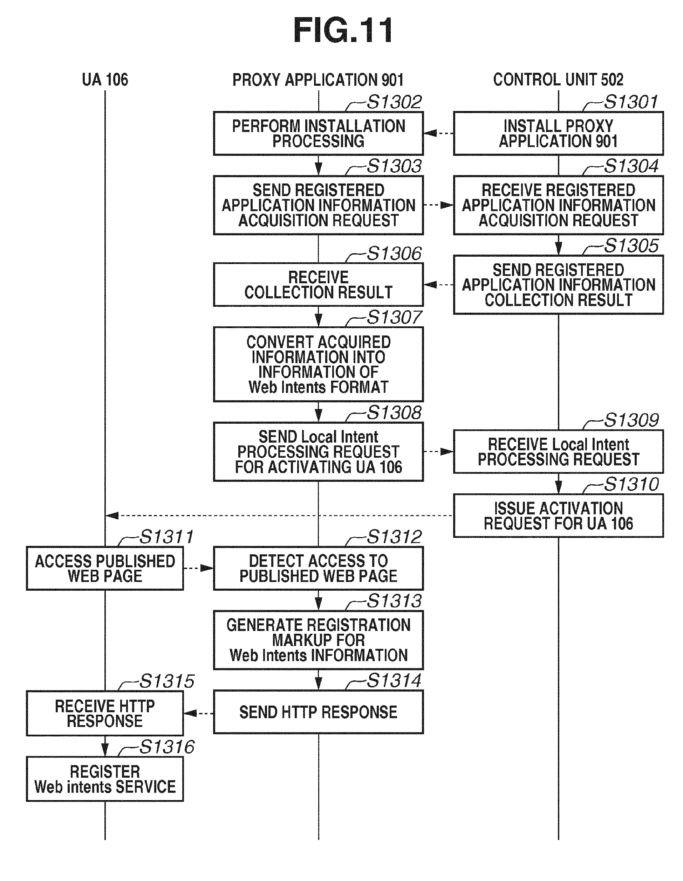

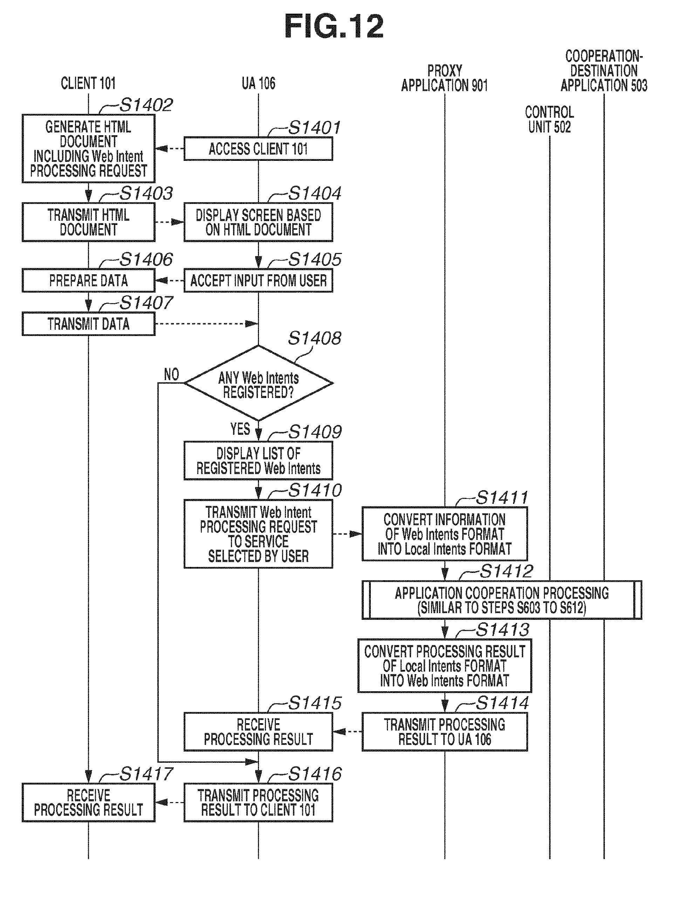

Next, operations performed when the client 101 and the cooperation-destination application 503, which is included in the information processing terminal 102, cooperate with each other are described with reference to Figs. 11 and 12.

First, operations performed from the time when the proxy application 901 is installed on the information processing terminal 102 until the time when information of Web Intents is stored into the UA 106 are described with reference to the sequence diagram of Fig. 11.

Fig. 11 is a sequence diagram illustrating operations performed from the time when the proxy application 901 is installed on the information processing terminal 102 until the time when information of Web Intents is stored into the UA 106. Here, it is supposed that information about the cooperation-destination application 503 is previously registered with the control unit 502 in a manner similar to that in steps S601 and S602 illustrated in Fig. 5 and is managed with the registered application management table 1220.

In step S1301, in response to the user operation or the like, the control unit 502 installs the proxy application 901 on the information processing terminal 102. After processing associated with installation, such as file copying, is completed and the proxy application 901 is activated, in step S1302, the proxy application 901 performs processing associated with installation, such as registration of application information with the control unit 502.

In step S1303, the intent processing unit 1114 of the proxy application 901 sends, to the control unit 502, an acquisition request for the registered application information. For example, in the Android OS, the intent processing unit 1114 can issue the acquisition request by invoking various functions, such as getInstalledApplications() of the PackageManager class.

In step S1304, the control unit 502 receives the acquisition request sent in step S1303, and acquires the registered application management table 1220, such as that illustrated in Fig. 10B, from the application information storage unit 1121. Then, in step S1305, the control unit 502 sends, to the proxy application 901, information of the acquired registered application management table 1220 as a registered application information collection result.

In step S1306, the proxy application 901 receives the collection result sent in step S1305, and stores a copy of the collection result into the registered application management table 1260 in the conversion table storage unit 1115 via the conversion table management unit 1113.

In step S1307, the proxy application 901 generates the application information conversion table 1250 inside the conversion table storage unit 1115 using the registered application management table 1260 and the Action conversion table 1240.

For example, in the case of generating information of an entry in which the "ID" in the application information conversion table 1250 is "1", the proxy application 901 stores "App ID" ("1" in the present example) of the registered application management table 1260 into "App ID" of the application information conversion table 1250.

The proxy application 901 stores a value obtained by converting the value of "action" of the registered application management table 1260 using the Action conversion table 1240 into "action" of the application information conversion table 1250. In the present example, the value of "action" of the registered application management table 1260 is "ACTION_SEND". Converting "ACTION_SEND" using the Action conversion table 1240 results in the value of "action" of the application information conversion table 1250 being "http://Web Intents.org/share". In the present embodiment, this value is abbreviated as "share".

Furthermore, the proxy application 901 stores the value of "mime type" of the registered application management table 1260 into "type" of the application information conversion table 1250. The proxy application 901 registers, in "href" of the application information conversion table 1250, a connection destination that the proxy application 901 is able to identify as a relative connection destination (URL). Here, the proxy application 901 registers a character string (ACTION_SEND.html) generated from the value of "action" of the registered application management table 1260.

The proxy application 901 stores the value of "application name" of the registered application management table 1260 into "title" of the application information conversion table 1250. The proxy application 901 registers, in "base URI" of the application information conversion table 1250, "http://localhost/proxy/aaa_App", which is obtained by adding the application name "aaa App" to "http://localhost/proxy/". Here, "http://localhost/proxy/" is a reference URL of the proxy application 901 itself. Combining the above-described "href" and "base URI" enables generating a published web page of Web Intents.

Furthermore, although, in the above-described example, the values of "mime type" and "application name" are directly stored in "type" and "title" of the application information conversion table 1250, a conversion table may be used separately. Moreover, values generated by a different generation rule may be registered in "href" and "base URI" of the application information conversion table 1250. As described above, the Intent conversion unit 1112 of the proxy application 901 converts the classification included in the definition information of applications in the information processing terminal 102 in conformity with the format of classification information included in the function information of Web Intents.

In step S1308, the Intent processing unit 1114 of the proxy application 901 generates a Local Intent processing request for activating the UA 106 and sends the Local Intent processing request to the control unit 502. In doing so, the Intent processing unit 1114 specifies the URL of a web page used to register a Web Intents service, which is published by the proxy application 901 as a URL that the UA 106 accesses. Here, the specified URL is "http://localhost/proxy/".

In step S1309, the control unit 502 receives, via the communication unit 1150, the Local Intent processing request sent in step S1308. In step S1310, the control unit 502 activates the UA 106 so as to access the URL specified in step S1308.

After being activated by the control unit 502, in step S1311, the UA 106 transmits an HTML acquisition request as an HTTP request to the URL specified in step S1310. In other words, the UA 106 accesses a web page published by the proxy application 901, specified in step S1308. In this case, more specifically, the HTTP request from the UA 106 is passed to the proxy application 901 via the communication unit 1150.

In step S1312, the proxy application 901 detects access to the published web page. Then, in step S1313, the presentation unit 1111 of the proxy application 901 generates a registration markup for the Web Intents service. The registration markup for the Web Intents service, which is generated in the present example, is used to register information of the Web Intents format, which is registered in the application information conversion table 1250 generated in step S1307.

In step S1314, the presentation unit 1111 of the proxy application 901 sends, to the UA 106, an HTML document including the registration markup generated in step S1313 as an HTTP response. In step S1315, the UA 106 receives the HTTP response sent in step S1314. Then, in step S1316, the analysis unit 1143 of the UA 106 analyzes the registration markup included in the HTML document received in step S1315, and registers the Web Intents service. More specifically, the analysis unit 1143 analyzes the registration markup to specify the Web Intents service. Then, the service management unit 1144 of the UA 106 registers the required information in the registered Web Intents service table 1230 of the service storage unit 1145.

As described above, the Web Intents services registered by executing the sequence illustrated in Fig. 11 are items the values of "ID" of the registered Web Intents service table 1230 of which are "4", "5", and "6".

The sequence diagram illustrated in Fig. 11 has been described above.

Next, operations performed when the client 101 and the cooperation-destination application 503 cooperate with each other are described with reference to the sequence diagram of Fig. 12.

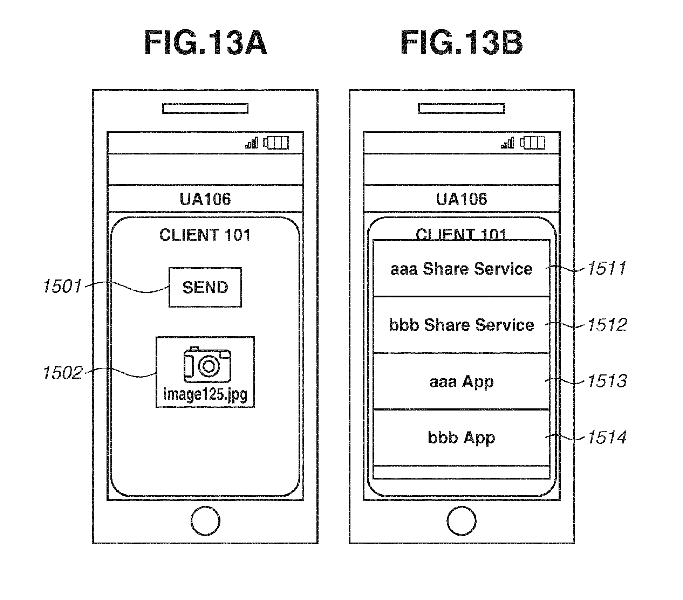

Fig. 12 is a sequence diagram illustrating operations performed when the client 101 and the cooperation-destination application 503 cooperate with each other. Processing in steps S1401 to S1409 illustrated in Fig. 12 is similar to processing in steps S208 to S216 illustrated in Fig. 2. The description of the above steps is supplemented with the use of examples of user interfaces (UIs) illustrated in Figs. 13A and 13B. Figs. 13A and 13B illustrate examples of UI screens displayed on the display device 1007 of the information processing terminal 102 when the client 101 and the cooperation-destination application 503 cooperate with each other.

Fig. 13A illustrates an example of a UI on which the HTML document received by the UA 106 from the client 101 is displayed in step S1404. The UI illustrated in Fig. 13A corresponds to a UI used for the client 101 to transmit an image data file "image125.jpg" 1502 to another service. In step S1405, the UA 106 accepts the press of a "SEND" button 1501 in the UI illustrated in Fig. 13A, and executes ECMAScript for Web Intents activation to issue an image data acquisition request to the client 101.

Here, supposing that ECMAScript 400 illustrated in Fig. 3B is executed, in response to the press of the "SEND" button 1501, Web Intents the "action" of which is "http://Web Intents.org/share" is executed. In steps S1408 and S1409, the UA 106 receives the image data file "image125.jpg" from the client 101 and displays a list of provision functions of Web Intents services registered with the UA 106 itself. More specifically, the UA 106 extracts services the "action" of which is "share" from Web Intents information registered in the registered Web Intents service table 1230 illustrated in Fig. 10C, and displays a list of the extracted services. An example of the UI on which the list of extracted services is displayed is illustrated in Fig. 13B. In the example illustrated in Fig. 13B, a list of services 1511 to 1514 is displayed as options.

The description now refers back to Fig. 12.

In step S1410, similar to step S217 in Fig. 2, the UA 106 transmits an HTTP request to a service specified as a connection destination of the selected provision function in response to a selection instruction from the user to the UI screen. In doing so, the UA 106 also includes the content of the Intent object generated by ECMAScript 400, illustrated in Fig. 3B, in the transmitted data, similar to step S217 in Fig. 2. Here, it is supposed that a provision function that the proxy application 901 provides ("aaa App" 1513 or "bbb App" 1514) has been selected by the user. In this case, the proxy application 901 receives the HTTP request transmitted in step S1410.

In step S1411, the proxy application 901 extracts a Web Intent object from the HTTP request received in step S1410, and converts the extracted Web Intent object into the Local Intents format. More specifically, the proxy application 901 converts "action" of the Web Intent object into "action" of the Local Intents format while using the Action conversion table 1240 illustrated in Fig. 10D. Furthermore, the proxy application 901 converts "type" into "mime type" according to the rule defined by the proxy application 901. Similarly, the proxy application 901 clips information of the cooperation-destination application from the URL invoked by the UA 106.

In step S1412, the proxy application 901, serving as the cooperation-source application 501, expressly specifies the cooperation-destination application 503 using the information converted in step S1411, and sends a Local Intent processing request to the control unit 502 (corresponding to step S603 in Fig. 5). The control unit 502 selects the cooperation-destination application 503 based on the Local Intent processing request, and sends an application processing request to the cooperation-destination application 503 (corresponding to steps S604 to S606 in Fig. 5). The cooperation-destination application 503 executes the requested processing, and sends a processing result to the proxy application 901, serving as the cooperation-source application 501, via the control unit 502 (corresponding to steps S607 to S612 in Fig. 5). Step S1412 is similar to steps S603 to S612 illustrated in Fig. 5, and the description thereof is, therefore, omitted.

Next, in step S1413, the proxy application 901 converts the Local Intent processing result received from the cooperation-destination application 503 into a processing result of the Web Intents format. More specifically, the Intent processing unit 1114 of the proxy application 901 receives the Local Intent processing result (success/failure) in the cooperation-destination application 503 based on the callback function onActivityResult() illustrated in Fig. 6B. Next, the Intent conversion unit 1112 of the proxy application 901 generates a response including ECMAScript, which is to be transmitted to the client 101, based on the received processing result.

Next, in step S1414, the proxy application 901, serving as the service 103, transmits the response generated in step S1413 to the UA 106. Steps S1415 to S1417 are similar to steps S220 to S222 illustrated in Fig. 2, and the description thereof is, therefore, omitted.

The sequence diagram illustrated in Fig. 12 has been described above.

The first embodiment has also been described above.

As described above, in the first embodiment, the proxy application 901 converts a processing execution request issued from a web application into a processing execution request that an application included in an information processing terminal is able to process, and performs a relaying operation (or performs intent interpretation or data transfer). This enables a processing request issued from a web application (the client 101) on the Internet to be processed by an application (the cooperation-destination application 503) included in an information processing terminal. In other words, a service on a network (a web application on the Internet) and an application included in an information processing terminal can readily cooperate with each other.

In the above-described first embodiment, an example in which, when the proxy application 901 is installed, information about previously-existing applications is registered with the UA 106 has been described. In a second embodiment, an example in which, after the proxy application 901 is installed, information about an application newly installed on the information processing terminal 102 is registered with the UA 106 is described.

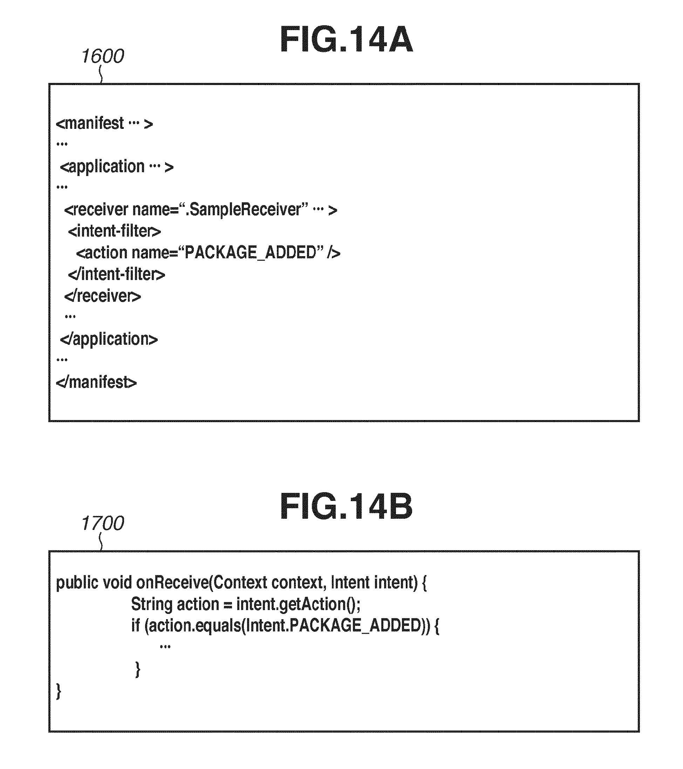

Figs. 14A and 14B illustrate examples of parts of a manifest file and source code of the proxy application 901, respectively, according to the second embodiment.

Fig. 14A illustrates an example of a part of a manifest file 1600 included in the proxy application 901 according to the second embodiment.

As illustrated in Fig. 14A, the <receiver> tag is written in the manifest file 1600 included in the proxy application 901. Information about a broadcast intent that the proxy application 901 receives is described in the <receiver> tag.

In the example illustrated in Fig. 14A, "PACKAGE_ADDED (a new application has been installed on the information processing terminal)" is written as a broadcast intent that the proxy application 901 receives. The broadcast intent is Intent that the control unit 502 sends by broadcast when a change has happened in the state of the information processing terminal 102.

Fig. 14B illustrates an example of a part of source code 1700 of the proxy application 901.

A onReceiver() function is written in the source code 1700 of the proxy application 901. The onReceiver() function is a function that the proxy application 901 executes when receiving the broadcast intent sent from the control unit 502.

When another application is installed on the information processing terminal 102 after the proxy application 901 is installed, the broadcast intent is sent by the control unit 502 to invoke the onReceiver() function. When detecting that the onReceiver() function has been invoked, the proxy application 901 executes step S1303 illustrated in Fig. 11. In other words, the proxy application 901 sends an acquisition request for registered application information to the control unit 502. As a result, information about the application is converted into Web Intents information and is then registered in the registered Web Intents service table 1230 of the UA 106 (steps S1304 to S1316 illustrated in Fig. 11). The subsequent procedure in which the client 101 and the cooperation-destination application 503 cooperate with each other is similar to that illustrated in Fig. 12 in the first embodiment.

The second embodiment has been described above.

As described above, in addition to the advantageous effect obtained in the first embodiment, the second embodiment enables the client 101 and the cooperation-destination application 503 to cooperate with each other even when another application is installed on the information processing terminal 102 after the proxy application 901 is installed.

Furthermore, in the first embodiment and the second embodiment, an example has been described in which, at a time when an application has been installed on the information processing terminal 102, the proxy application 901 converts, via the control unit 502, information about a function that the application provides into Web Intents format, and registers the converted Web Intents information with the UA 106. However, the control unit 502, the proxy application 901, or the UA 106 may periodically search the inside of the information processing terminal 102, and, at a time when detecting information about a function that an application to be newly registered provides at the periodic search, may convert the detected information into Web Intents format and register the converted Web Intents information with the UA 106. Alternatively, the control unit 502, the proxy application 901, or the UA 106 may search for information about a function that an application to be newly registered provides when the UA 106 is activated, and, when detecting the information about a function that an application to be newly registered provides at the search, may convert the detected information into Web Intents format and register the converted Web Intents information with the UA 106.

In a third embodiment, it is supposed that information about a service to be registered with the UA 106 is only information about a provision function of the proxy application 901. Then, an example in which, when the user has selected the provision function of the proxy application 901 as a Web Intent processing request destination, applications capable of cooperation are enumerated on a published web page of the proxy application 901 is described.

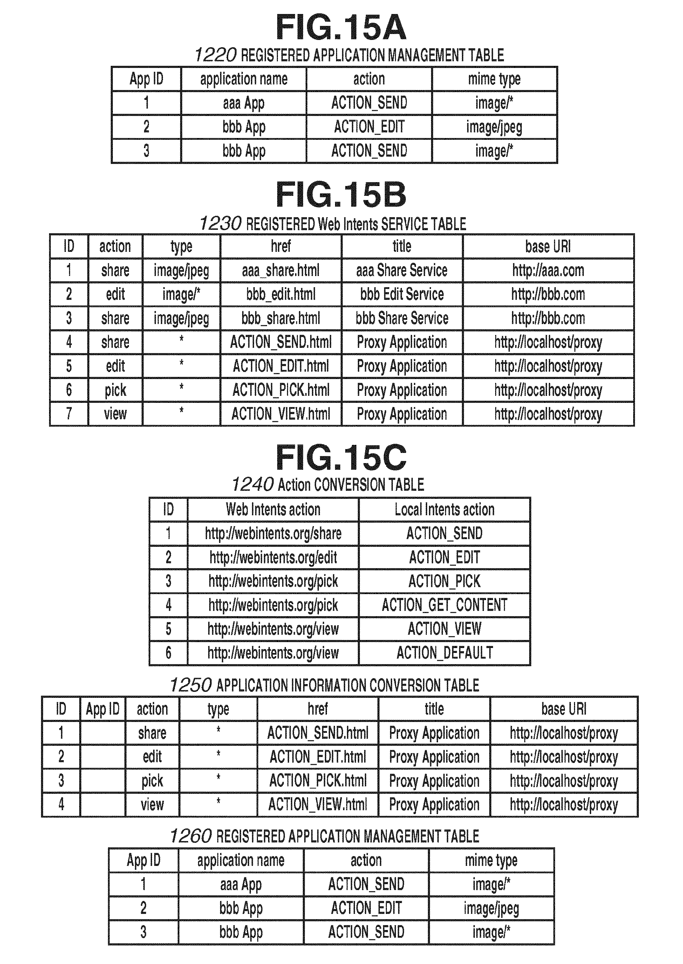

Figs. 15A, 15B, and 15C illustrate example configurations of tables according to the third embodiment.

Figs. 15A to 15C illustrate examples of tables obtained by storing data adapted for the third embodiment into the tables illustrated in Figs. 10B to 10D.

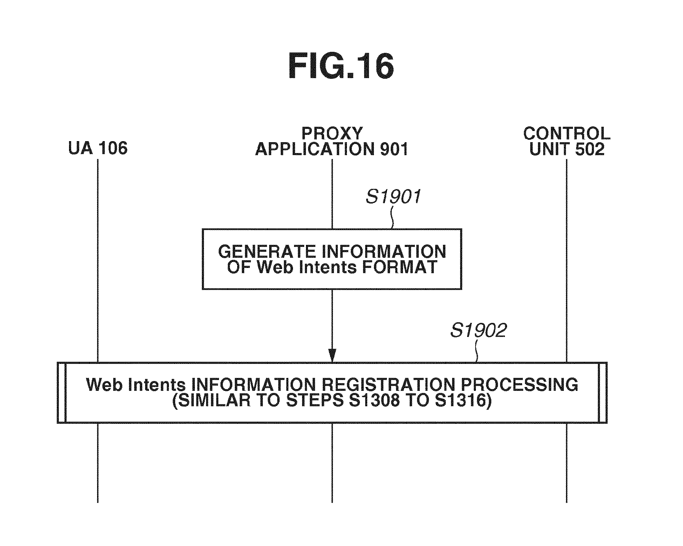

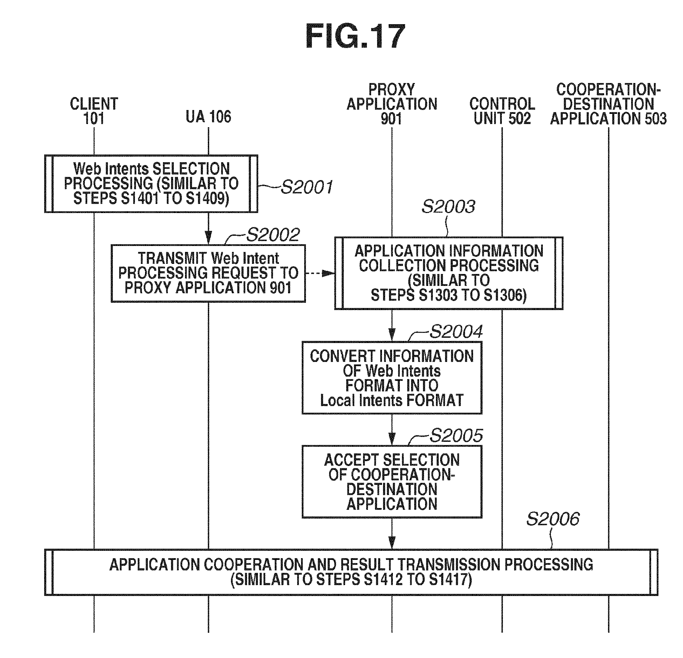

Next, operations performed when the client 101 and the cooperation-destination application 503 included in the information processing terminal 102 cooperate with each other in the third embodiment are described with reference to Figs. 16 and 17.

First, operations performed from the time when the proxy application 901 is installed on the information processing terminal 102 until the time when Web Intents information of the proxy application 901 is stored into the UA 106 are described with reference to the sequence diagram of Fig. 16.

Fig. 16 is a sequence diagram illustrating operations performed from the time when the proxy application 901 is installed on the information processing terminal 102 until the time when Web Intents information of the proxy application 901 is stored into the UA 106.

When the proxy application 901 is installed and then activated according to processing similar to that in steps S1301 and S1302 illustrated in Fig. 11, the proxy application 901 executes processing in step S1901. In step S1901, the proxy application 901 generates an application information conversion table 1250 illustrated in Fig. 15C by using an Action conversion table 1240 illustrated in Fig. 15C.

In doing so, the proxy application 901 leaves the column "App ID" of the application information conversion table 1250, which is not used in the third embodiment, blank. In the column "action", only categories of different values are stored from among values stored in the column "Web Intents action" of the Action conversion table 1240. In the present example, the values of "Web Intents action" of ID = 4 and ID = 6, which are respectively equal to those of ID = 3 and ID = 5, are, therefore, not stored in the column "action" of the application information conversion table 1250. In other words, the proxy application 901 generates the application information conversion table 1250 in such a manner as to enumerate information about categories of all functions that the cooperation-destination application is able to provide.

In the column "type", a mark "*" indicating every type is stored. The method for storing values of "href" is similar to that described in step S1307, and the description thereof is, therefore, omitted. In the column "title", "Proxy Application", which is the application name of the proxy application 901 itself, is stored. In the column "base URI", "http://localhost/proxy/", which is a reference URL of the proxy application 901, is stored. Combining the values of "href" and "base URI" enables generating a published web page of Web Intents of the proxy application 901.

Processing in step S1902 is similar to that in steps S1308 to S1316 illustrated in Fig. 11, and the description thereof is, therefore, omitted. Furthermore, before executing step S1901, the proxy application 901 may perform application information collection processing in steps S1303 to S1306 illustrated in Fig. 11, and may generate in advance the registered application management table 1260 illustrated in Fig. 15C. In this case, processing in step S2003 illustrated in Fig. 17, which is described below, is performed to update the values of the registered application management table 1260.

The sequence diagram of Fig. 16 has been described above.

Next, operations performed when the client 101 and the cooperation-destination application 503 cooperate with each other are described with reference to the sequence diagram of Fig. 17.

Fig. 17 is a sequence diagram illustrating operations performed when the client 101 and the cooperation-destination application 503 cooperate with each other according to the third embodiment.

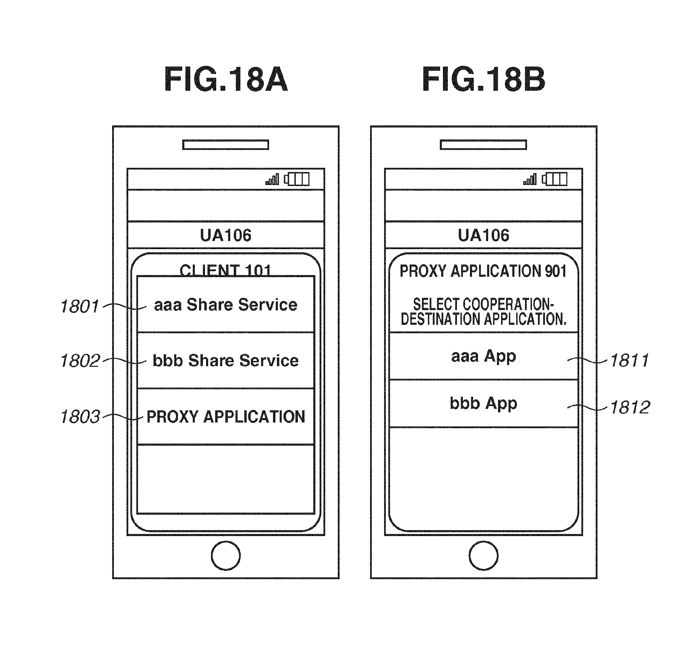

Processing in step S2001 is similar to that in steps S1401 to S1409 illustrated in Fig. 12, and the description thereof is, therefore, omitted. Here, the client 101 issues a Web Intents request the "action" of which is "share". In this case, the UA 106 displays a UI such as that illustrated in Fig. 18A to accept selection of a Web Intents processing destination by the user.

Since the client 101 has issued a Web Intents request the "action" of which is "share", the UA 106 extracts services the "action" of which is "share" from the registered Web Intents service table 1230 illustrated in Fig. 15B, and displays a list of the extracted services as options 1801 to 1803.

In step S2002, the UA 106 receives selection of Web Intents based on the list of extracted services displayed in step S2001. Here, it is supposed that the proxy application 901 serving as the option 1803 is selected as a Web Intents processing destination. The UA 106 transmits an HTTP request for processing Web Intents to the proxy application 901.

In step S2003, the proxy application 901 performs application information collection processing and stores the collected values into the registered application management table 1260 illustrated in Fig. 15C. processing in step S2003 is similar to that in steps S1303 to S1306 illustrated in Fig. 11, and the description thereof is, therefore, omitted.

In step S2004, the proxy application 901 extracts applications that are able to provide a function coincident with "action" (in the present example, "share") requested by the client 101, and displays a list of the extracted applications. To implement the above-mentioned extraction, the proxy application 901 uses the Action conversion table 1240 and the registered application management table 1260.

More specifically, the proxy application 901 converts "action" of Web Intents (http://Web Intents.org/share) into "action" of Local Intents (ACTION_SEND) by using the Action conversion table 1240. Next, the proxy application 901 extracts applications ("application name") of provision functions the "action" of which is "ACTION_SEND".

Fig. 18B illustrates an example of a UI displayed after step S2004 is executed. In the example of the UI illustrated in Fig. 18B, applications "aaa App" 1811 and "bbb App" 1812 are displayed as options in a list.

Furthermore, if the number of items to be displayed in a list is only one, the proxy application 901 may assume that the single item has been selected, without displaying a UI screen such as that illustrated in Fig. 18B, and may advance the processing to step S2006 without executing step S2005. Moreover, if there is no item to be displayed, the proxy application 901 transmits a message indicative of failure of the processing in a method similar to that in step S1414 illustrated in Fig. 12.

In step S2005, the proxy application 901, serving as a cooperation-source application, accepts selection of a cooperation-destination application by the user. More specifically, in the example of the UI illustrated in Fig. 18B, the proxy application 901 accepts selection of the application "aaa App" 1811 or "bbb App" 1812. Then, when detecting selection of the application "aaa App" 1811 or "bbb App" 1812, the proxy application 901, serving as a cooperation-source application, advances the processing to step S2006.

Processing in step S2006 is similar to that in steps S1412 to S1417 illustrated in Fig. 12, and the description thereof is, therefore, omitted. The sequence diagram of Fig. 17 has been described above. The third embodiment has also been described above.

As described above, in addition to the advantageous effect obtained in the first embodiment, the third embodiment enables, even when an application is added or deleted on an information processing terminal, dynamically establishing appropriate cooperation between the application and a web application by updating information about the application when a Web Intents request is received.

In a fourth embodiment, an example in which a request for update processing of cooperation-destination application information is issued from the UI of the UA 106 to the proxy application 901 is described.

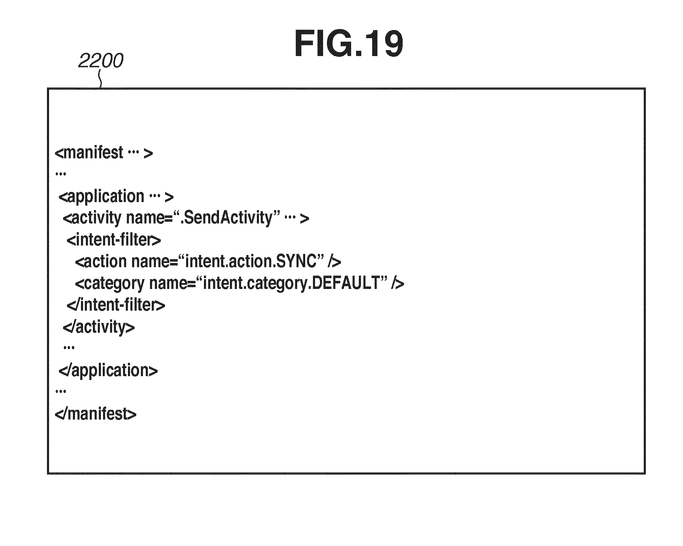

Fig. 19 illustrates an example of a part of a manifest file 2200 included in the proxy application 901 according to the fourth embodiment.

The manifest file 2200 illustrated in Fig. 19 differs from the manifest file 700 illustrated in Fig. 6A in that "action" named "intent.action.SYNC" for accepting the update processing request from the UA 106 is written in the <action> tag within the <intent-filter> tag.

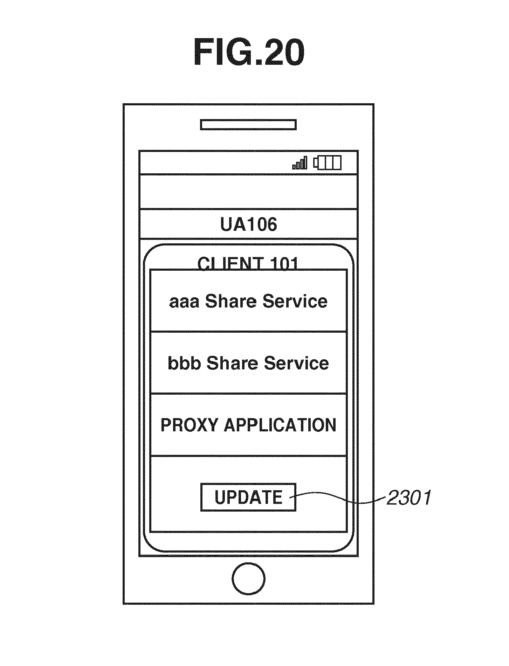

Processing similar to that in steps S1401 to S1409 illustrated in Fig. 12 is performed, and a list used for the user to select a Web Intents processing destination is displayed by the UA 106. In this case, the UA 106 according to the fourth embodiment displays a UI such as that illustrated in Fig. 20 and accepts a selection made by the user.

Fig. 20 illustrates an example of a UI for implementing the fourth embodiment.

Referring to Fig. 20, an "UPDATE" button 2301 is used to update information about a cooperation-destination application.

When detecting the press of the "UPDATE" button 2301 by the user on the UI illustrated in Fig. 20, the UA 106 issues, to the proxy application 901, local Intents processing for updating information about the cooperation-destination application ("action" of which is "intent.action.SYNC"). This causes the proxy application 901 to perform processing corresponding to the "intent.action.SYNC" function. In this case, the proxy application 901, the control unit 502, and the UA 106 perform processing equivalent to that in steps S1303 to S1316 illustrated in Fig. 11 to update the registered application management table 1220.

In other words, in the fourth embodiment, in response to an update instruction issued by the press of the "UPDATE" button on a screen displaying a list of Web Intents, the proxy application 901 searches, via the control unit 502, information about a function that an application to be newly registered provides. Then, at a time when detecting the information about a function that an application to be newly registered provides at the search, the proxy application 901 converts the information into Web Intents format and registers the converted Web Intents information with the UA 106.

The fourth embodiment has been described above.

As described above, in addition to the advantageous effect obtained in the first embodiment, the fourth embodiment enables, even when an application is added or deleted on an information processing terminal, updating information about the application in response to the user's instruction and dynamically establishing appropriate cooperation between the application and a web application.

Furthermore, the configurations and contents of the above-mentioned various pieces of data are not restrictive, and may be generally modified in various manners according to the intended usage or purpose.

While some embodiments have been described, the present invention can be embodied in the form of a system, an apparatus, a method, a program, or a storage medium. Moreover, the present invention can be applied to a system composed of a plurality of devices, or can be applied to an apparatus composed of a single device.

Furthermore, various configurations obtained by combining the above-described embodiments can also be included in the present invention.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random access memory (RAM), a read-only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of this invention.

## Claims

1. An information processing terminal having a relay function that allows a client, which manages data, and a service, which provides a function using the data managed by the client, to cooperate with each other via a network, the information processing terminal comprising:
reception means for receiving function information for invoking a function that a first service, which resides on the network, provides;
conversion means for converting definition information of a second service, which resides in the information processing terminal, into a format of the function information so as to invoke, via the relay function, a function that the second service provides;
registration means for performing registration processing using the relay function for invoking the functions that the first service and the second service provide; and
provision means for providing, to a user, a screen used to invoke the functions that the first service and the second service provide according to the registration processing,
wherein invocation of the functions is performed using the function information received by the reception means or information obtained by the conversion means converting the definition information, according to a selection instruction issued by the user to the screen.

2. The information processing terminal according to claim 1, wherein the conversion means is configured to convert a classification included in the definition information of the second service in conformity with a format of classification information included in the function information.

3. The information processing terminal according to claim 1 or 2, wherein, in response to a notification of a processing result obtained by the function that the second service invoked by using the information obtained by the conversion means converting the definition information provides, the conversion means is configured to convert the processing result into a format of a processing result obtained by the function that the first service provides.

4. The information processing terminal according to any one of claims 1 to 3, wherein the provision means is configured to provide the screen on which function information based on the information obtained by the conversion means converting the definition information or function information of another service that manages invocation of the second service is displayed to invoke the function that the second service provides.

5. The information processing terminal according to any one of claims 1 to 4, wherein the registration means is configured to perform the registration processing at least one of at a time when an application is installed on the information processing terminal, at a time when information to be newly registered is detected by periodic search, and in a case where information to be newly registered is detected when the relay function is activated.

6. The information processing terminal according to any one of claims 1 to 4, further comprising update instruction means for accepting an update instruction for detecting whether there is no information to be newly registered,
wherein the registration means is configured to perform the registration processing at least one of at a time when information to be newly registered is detected by the update instruction, at a time when an application is installed on the information processing terminal, at a time when information to be newly registered is detected by periodic search, and in a case where information to be newly registered is detected when the relay function is activated.

7. The information processing terminal according to any one of claims 1 to 6, wherein the network includes the Internet.

8. The information processing terminal according to any one of claims 1 to 7, wherein at least two of the client, the service, and the relay function are functions that operate in the same apparatus.

9. The information processing terminal according to any one of claims 1 to 8, wherein at least one of classification information corresponding to a function that shares data, classification information corresponding to a function that edits data, classification information corresponding to a function that views data, classification information corresponding to a function that picks up data, and classification information corresponding to a function that saves data is described as classification in the function information.

10. The information processing terminal according to any one of claims 1 to 9, wherein the function that the second service provides is not compliant with a format for the registration processing performed using the relay function.

11. A control method for an information processing terminal having a relay function that allows a client, which manages data, and a service, which provides a function using the data managed by the client, to cooperate with each other via a network, the control method comprising:
a reception step of receiving function information for invoking a function that a first service, which resides on the network, provides;
a conversion step of converting definition information of a second service, which resides in the information processing terminal, into a format of the function information so as to invoke, via the relay function, a function that the second service provides;
a registration step of performing registration processing using the relay function for invoking the functions that the first service and the second service provide; and
a provision step of providing, to a user, a screen used to invoke the functions that the first service and the second service provide according to the registration processing,
wherein invocation of the functions is performed using the received function information or information obtained by converting the definition information according to a selection instruction issued by the user to the screen.

12. A program which, when run on a computer, causes the computer to execute a method according to claim 11.

13. A computer-readable storage medium storing a program according to claim 12.
